# EUROPÄISCHE PATENTANMELDUNG

(11) **EP 1 407 650 A1**
(43) Veröffentlichungstag der Anmeldung: **14.04.2004**
(21) Anmeldenummer: 03021785.5
(22) Anmeldetag: 26.09.2003
(51) Int. Cl.: A01B 59/06, A01B 69/00

(54) **Geräteschnittstelle zur Kopplung von Arbeitsgeräten an ein Arbeitsfahrzeug und Ventilanordnung**

(30) Priorität: 09.10.2002 DE 10247058
(71) Anmelder: DEERE & COMPANY, Moline, Illinois 61265-8098 (US)
(72) Erfinder: Bernhardt, Gerd, Prof. Dr., 01728 Bannewitz/Hänichen (DE); Fedotov, Sergiy, 01069 Dresden (DE); Rudik, Ruslan, 01069 Dresden (DE)
(74) Vertreter: Lau-Loskill, Philipp, Dipl.-Phys.

(57) **Zusammenfassung**

Es wird eine Geräteschnittstelle beschrieben, die der Kopplung von Arbeitsgeräten an ein Arbeitsfahrzeug dient und die sechs längenverstellbaren doppelseitig wirkende Hydraulikzylinder (12, 14, 16, 18, 20, 22), welche nach Art eines Hexapoden zwischen dem Arbeitsfahrzeug und einem Kopplungsrahmen (26) angeordnet sind, enthält. Es sind zwei nebeneinander angeordnete zueinander konvergent verlaufende obere Hydraulikzylinder (18, 20), zwei nebeneinander angeordnete zueinander konvergent verlaufende untere Hydraulikzylinder (12, 14) sowie zwei seitliche Hydraulikzylinder (16, 22) enthalten. Erfindungsgemäß sind Mittel vorgesehen, die dafür Sorge tragen, dass für eine Pendelbewegung nach rechts der untere rechte Hydraulikzylinder (14) und der obere linke Hydraulikzylinder (20) synchron ausfahren und der untere linke Hydraulikzylinder (12) und der obere rechte Hydraulikzylinder (14) synchron einfahren. Für eine Pendelbewegung nach links verhalten sich die Hydraulikzylinder (12, 14, 18, 20) umgekehrt. Bei einer seitlichen Auslenkung des Arbeitsgeräts ergeben sich somit bei den jeweils diametral gegenüberliegenden oberen und unteren Hydraulikzylindern gleichzeitig gleiche Längenänderungen. Dabei sind bei den beteiligten Hydraulikzylindern die Einfahrhübe gleich den Ausfahrhüben.

## Beschreibung

Die Erfindung betrifft eine Geräteschnittstelle zur Kopplung von Arbeitsgeräten an ein Arbeitsfahrzeug mit sechs längenverstellbaren doppelseitig wirkenden Hydraulikzylindern, die nach Art eines Hexapoden zwischen dem Arbeitsfahrzeug und einem Kopplungsrahmen, der Kopplungsmittel für die Befestigung der Arbeitsgeräte aufweist, gemäß den Merkmalen des Oberbegriffs des Patentanspruchs 1 angeordnet sind. Die Erfindung betrifft des Weiteren eine Ventilanordnung für eine derartige Geräteschnittstelle.

Landwirtschaftliche Traktoren enthalten in ihrem Heckbereich üblicherweise eine Dreipunkt-Anbauvorrichtung bestehend aus zwei seitlichen Unterlenkern und einem mittleren Oberlenker. An die Lenker lässt sich ein Arbeitsgerät koppeln. Sie lassen sich durch Hydraulikzylinder in vertikaler Richtung verstellen, um das Arbeitsgerät anzuheben oder abzusenken. Innerhalb bestimmter Grenzen ist eine freie seitliche Auslenkung möglich, die gegebenenfalls durch Seitenstabilisatoren begrenzt oder verhindert werden kann. Die seitliche Beweglichkeit ist insbesondere beim Pflügen von großer Wichtigkeit, da der Pflug in horizontaler Hinsicht nicht starr am Traktor befestigt sein sollte. Vielmehr soll durch freies seitliches Pendeln der Geräteschnittstelle der Pflug von Lenkbewegungen des Traktors entkoppelt werden. Die horizontale Führung des Pfluges ergibt sich hierbei durch die konvergent verlaufenden Unterlenker, deren Wirkungslinien in einem Führungspunkt zusammenlaufen (August van der Beek: "Die Lage des ideellen Führungspunktes und der Zugkraftbedarf beim Pflügen", Grundlagen der Landtechnik (1983) Nr . 1, S. 10-13). Hingegen ist der Pflug in vertikaler Hinsicht starr mit dem Traktor verbunden oder unter Verwendung einer Regelung auf vorgebbare Werte einstellbar, um eine gewünschte Furchentiefe einzuhalten.

In der DE-A-199 51 840 wird eine Anbauschnittstelle zur Kopplung von Arbeitsgeräten an ein Arbeitsfahrzeug beschrieben, die einen Kopplungsrahmen und sechs längenverstellbare Hydraulikzylinder aufweist. Die jeweils ersten Enden der Hydraulikzylinder sind an dem Arbeitsfahrzeug und die jeweils zweiten Enden sind an dem Kopplungsrahmen angelenkt. Die Hydraulikzylinder sind in geschlossenen kinematischen Ketten, insbesondere nach Art eines Hexapoden angeordnet, bei dem die Verbindungselemente in den Eckpunkten eines rahmenseitigen bzw. eines fahrzeugseitigen Dreiecks angreifen. Diese Anordnung der Verbindungselemente ermöglicht Bewegungen des Kopplungsrahmens und des Arbeitsgerätes in sechs Freiheitsgraden. Zur Einstellung des Arbeitsgerätes relativ zum Arbeitsfahrzeug lassen sich die Längen der Hydraulikzylinder weitgehend unabhängig voneinander einstellen. Dabei ist das Verhältnis der Längen zueinander durch eine geeignete Steuerung beliebig einstellbar. Eine freie seitliche Bewegung bei festgelegter vertikaler Lage ist bei dieser Hexapodenanordnung nicht ohne Weiteres möglich, denn wenn alle Hydraulikzylinder frei geschaltet werden, ist die Einstellung auf eine feste, vorgebbare vertikale Lage nicht möglich. Werden hingegen lediglich die beiden oberen und die beiden unteren Hydraulikzylinder freigeschaltet und die beiden seitlichen Hydraulikzylinder starr gestellt, so kann sich der Pflug infolge auftretender Kräfte im Arbeitseinsatz um eine in Fahrzeuglängsrichtung verlaufende Achse verdrehen, was das Arbeitsergebnis erheblich beeinträchtigt.

Die der Erfindung zugrunde liegende Aufgabe wird darin gesehen, ein Geräteschnittstelle sowie eine Ventilanordnung der eingangs genannten Art anzugeben, die bei fest einstellbarer Höhenlage ein freies seitliches Pendeln ermöglichen (Schwimmstellung). Dabei soll sich der Koppelrahmen jedoch nicht um eine Fahrzeuglängsachse verdrehen.

Die Aufgabe wird erfindungsgemäß durch die Lehre eines der Patentansprüche 1 oder 9 gelöst. Weitere vorteilhafte Ausgestaltungen und Weiterbildungen der Erfindung gehen aus den Unteransprüchen hervor.

Die erfindungsgemäße Geräteschnittstelle dient der Kopplung von Arbeitsgeräten an ein Arbeitsfahrzeug und enthält sechs längenverstellbaren doppelseitig wirkende Hydraulikzylinder, die nach Art eines Hexapoden zwischen dem Arbeitsfahrzeug und einem Kopplungsrahmen, der Kopplungsmittel für die Befestigung der Arbeitsgeräte aufweist, angeordnet sind. Die gelenkigen Angriffspunkte der Hydraulikzylinder liegen im Wesentlichen in den Eckpunkten eines fahrzeugseitigen Dreiecks sowie in den Eckpunkten eines rahmenseitigen Dreiecks. Es sind zwei nebeneinander angeordnete zueinander konvergent verlaufende obere Hydraulikzylinder, zwei nebeneinander angeordnete zueinander konvergent verlaufende untere Hydraulikzylinder sowie zwei seitliche Hydraulikzylinder enthalten. Erfindungsgemäß sind Mittel vorgesehen, die dafür Sorge tragen, dass für eine Pendelbewegung nach rechts der untere rechte Hydraulikzylinder und der obere linke Hydraulikzylinder synchron ausfahren und der untere linke Hydraulikzylinder und der obere rechte Hydraulikzylinder synchron einfahren und dass für eine Pendelbewegung nach links der untere rechte Hydraulikzylinder und der obere linke Hydraulikzylinder synchron einfahren und der untere linke Hydraulikzylinder und der obere rechte Hydraulikzylinder synchron ausfahren. Bei einer seitlichen Auslenkung des Arbeitsgeräts ergeben sich somit bei den jeweils diametral gegenüberliegenden oberen und unteren Hydraulikzylindern gleichzeitig gleiche Längenänderungen. Dabei sind bei den beteiligten Hydraulikzylindern die Einfahrhübe gleich den Ausfahrhüben.

Die synchrone Bewegung der Hydraulikzylinder kann grundsätzlich aufgrund von seitlichen Kräften, die von dem Arbeitsgerät auf den Traktor übertragen werden und sich durch geeignete Aufnehmer messen lassen, aktiv beeinflusst werden. Besonders vorteilhaft ist es jedoch, wenn sich die synchrone Bewegung passiv einstellt und keine zusätzlichen Mess- und Steuerungsmittel erforderlich sind. Gemäß einer besonders vorteilhaften Weiterbildung der Erfindung wird für das passive Nachführen eine Ventilanordnung verwendet, die zur Herstellung der Schwimmstellung geeignete Verbindungen zwischen den Kammern der Hydraulikzylinder herstellt. Wird keine Schwimmstellung gewünscht, werden dies Verbindungen unterbrochen bzw. geschlossen.

Bei der aus der DE-A-199 51 840 bekannten Anbauschnittstelle lassen sich aufgrund von Sollwertvorgaben die Längen der Hydraulikzylinder einstellen (keine Schwimmstellung), um das Arbeitsgerät in eine gewünschte Lage zu bringen. Hierfür ist eine Steuerventilanordnung vorgesehen, die beispielsweise aus mehreren Ventilmodulen aufgebaut sein kann, wobei jedem Hydraulikzylinder ein Ventilmodul zugeordnet ist. Bei Anwendung der vorliegenden Erfindung auf diese bekannte Anordnung ist es für eine platzsparende und kostengünstige Ausbildung von besonderem Vorteil, die der Schwimmstellung dienende Ventilanordnung in die genannte Steuerventilanordnung zu integrieren.

In vorteilhafter Weise ist jedem Hydraulikzylinder ein gesondertes Ventilmodul zugeordnet, welches einerseits Steuerventile der Steuerventilanordnung zur aktiven Beeinflussung des zugehörigen Hydraulikzylinders enthält und in das andererseits Elemente der Ventilanordnung für die Schwimmfunktion integriert sind. Die Ventilmodule lassen sich zu einem Ventilblock zusammensetzen, der beispielsweise am Heck des Arbeitsfahrzeugs montiert wird. Die einzelnen Ventilmodule können beispielsweise nebeneinander montiert und zu einer Baueinheit zusammengefügt und derart gegeneinander abgedichtet sein, dass Versorgungsleitungen, die zu einer Hydraulikdruckquelle und zu einem drucklosen Vorratsbehälter führen, durch die Baueinheit verlaufen, sodass hierbei der Aufwand für gesonderte äußere Leitungen verringert wird.

Um Fertigungskosten gering zu halten, ist es auch von Vorteil, die einzelnen Ventilmodule weitgehend identisch auszubilden, was hinsichtlich der Steuerventile keine Schwierigkeit darstellt. Bezüglich der Ventilanordnung für die Schwimmfunktion werden jedoch an die Ventilmodule unterschiedliche Anforderungen gestellt. Um diesen Anforderungen gerecht zu werden und um eine weitgehende Baugleichheit der Ventilmodule zu ermöglichen, können alle Ventilmodule mit identischen Hydraulikbohrungen versehen werden, welche entsprechend der jeweils geforderten Funktion durch Blindschrauben oder Blindstopfen verschlossen bzw. mit entsprechenden Ventilen bestückt werden.

Eine bevorzugte erfindungsgemäße Ausbildung sieht vor, dass die für die Schwimmstellung vorgesehenen Mittel eine Ventilanordnung enthalten, welche zur Ermöglichung einer freien seitlichen Auslenkung (Schwimmstellung) die erste Kammer des oberen rechten mit der ersten Kammer des unteren rechten Hydraulikzylinders sowie die erste Kammer des oberen linken mit der ersten Kammer des unteren linken Hydraulikzylinders sowie die zweite Kammer des oberen rechten mit der zweiten Kammer des oberen linken Hydraulikzylinders sowie die zweite Kammer des unteren rechten mit der zweiten Kammer des unteren linken Hydraulikzylinders miteinander verbindet. Die jeweils erste Kammer bzw. die jeweils zweite Kammer kann entweder der Ringraum oder der Kolbenraum des Hydraulikzylinders sein. Besonders bewährt hat sich eine Anordnung, bei der die jeweils erste Kammer der Kolbenraum und die jeweils zweite Kammer der Ringraum des zugehörigen Hydraulikzylinders ist.

Bei geöffneten Verbindungen ergibt sich eine Schwimmstellung, die ein seitliches Pendeln des Arbeitsgeräts bezüglich des Arbeitsfahrzeugs zulässt. Dabei werden die beiden seitlichen Hydraulikzylinder durch die Ventilanordnung, die der Einstellung der Schwimmstellung dient, nicht beeinflusst. Diese seitlichen Hydraulikzylinder befinden sich während der Schwimmstellung entweder in Gleichlauf oder sie sind starr geschaltet, indem ihre Kammern gesperrt sind.

Da es aus Fertigungsgründen schwierig sein kann, die Volumina der Hydraulikzylinder korrekt aufeinander abzustimmen, können während der Schwimmstellung Unterdrücke in einem solchen geschlossenen System auftreten. Diese Unterdrücke können die Leckage vergrößern, die Eigenschaften der Hydraulikflüssigkeit ungünstig beeinflussen und manchmal zu Kavitationen im System führen. Es ist daher für einen zuverlässigen Betrieb von Vorteil, Nachfüllventile vorzusehen, die einen Flüssigkeitsfluss vom Vorratsbehälter zu den Hydraulikzylindern ermöglichen, sofern der Druck in einem Hydraulikzylinderraum unter einen vorgebbaren Druck fällt. Gemäß einer bevorzugten Weiterbildung der Erfindung ist hierfür zwischen wenigstens einer Kammer eines der Hydraulikzylinder und einem Flüssigkeitsvorratsbehälter ein Nachfüllventil vorgesehen, welches einen Flüssigkeitsfluss vom Flüssigkeitsvorratsbehälter zu dem Hydraulikzylinder ermöglicht. Vorzugsweise steht der Kolbenraum sowie der Ringraum jedes der Hydraulikzylinder durch je ein zugehöriges Nachfüllventil, das als Rückschlagventil ausgebildet sein kann, mit dem Flüssigkeitsvorratsbehälter in Verbindung.

Es ist auch zweckmäßig, wenn der Kolbenraum sowie der Ringraum jedes der Hydraulikzylinder durch je ein zugehöriges Folgeventil mit dem Flüssigkeitsvorratsbehälter in Verbindung steht.

Der Ausfahrhub und der Einfahrhub eines Hydraulikzylinders ist vorzugsweise durch definierte Anschläge begrenzt. Es ergeben sich dabei Anschläge, welche gemäß einer bevorzugten Weiterbildung der Erfindung derart ausgelegt sind, dass sie die bezüglich der Fahrzeuglängsrichtung seitliche Bewegung der Geräteschnittstelle zu beiden Seiten auf eine vorgebbare Pendelauslenkung und/oder einen vorgebbaren Pendelwinkel begrenzen. Die Pendelauslenkung kann dabei einen Wert von beispielsweise 400 mm einnehmen. Das bedeutet, dass sich der Kopplungsrahmen während der Schwimmstellung aus einer mittleren Grundsstellung sowohl nach links als auch nach rechts um jeweils 200 mm seitlich verschieben lässt. In seiner mittleren Grundstellung nimmt der Kopplungsrahmen eine Grundposition ein, in der er im allgemeinen senkrecht zur Fahrtrichtung ausgerichtet ist und die Hydraulikzylinder eine mittlere Einfahrstellung einnehmen. Beim Pendeln verdreht sich der Kopplungsrahmen im Wesentlichen um eine vertikale Achse und schließt gegenüber seiner Grundposition einen Pendelwinkel (Neigung des Kopplungsrahmens gegenüber eine quer zur Fahrzeuglängsrichtung verlaufende Fläche) ein. Auch die Größe dieses Pendelwinkels lässt sich durch eine entsprechende Auslegung der Zylinderanschläge auf vorgebbare Werte, beispielsweise auf 4° bis 6°, begrenzen. Die Begrenzung der Pendelauslenkung und/oder des Pendelwinkels wird z. B. bei einer Bedingung erreicht, bei der ein Zylinderpaar, welches aus dem rechten oberen und dem rechten unteren Hydraulikzylinder bzw. dem linken oberen und dem linken unteren Hydraulikzylinder besteht, auf einen bestimmten, durch die Zylinderanschläge begrenzten Hubbereich ausgefahren sind. Dieser Hubbereich ist durch eine Steuereinrichtung der Geräteschnittstelle beim Einsetzen des Gerätes zu überwinden, so dass dadurch eine sinnvolle Pendelauslenkung eingehalten wird (in der Regel 175 bis 200 mm).

Aus Sicherheitsgründen und aus Gründen der Arbeitserleichterung ist es von besonderem Vorteil, die horizontale Schwimmstellung in Abhängigkeit des aktuellen Arbeitsbetriebs zu steuern. Eine bevorzugte Weiterbildung der Erfindung sieht hierfür die Erfassung wenigstens eines Hubhöhensignals vor, welches die aktuelle Hubhöhe des Kopplungsrahmens oder des Arbeitsgeräts repräsentiert. Steuerungsmittel aktivieren und/oder deaktivieren dann, wenn eine vorgebbare Hubhöhe unterschritten (z. B. beim Eindringen der ersten Pflugschar eines Mehrscharpfluges in den Boden) oder überschritten wird, die horizontale Schwimmstellung automatisch. Damit wird die Bedienungsperson wesentlich entlastet, da sie lediglich am Beginn und am Ende der Bodenbearbeitung die Schwimmstellungsautomatik ein- bzw. ausschalten muss.

Vorzugsweise ist eine erste Eingabevorrichtung vorgesehen, durch welche die horizontale Schwimmstellung aktivierbar und/oder deaktivierbar ist. Es kann sich hierbei um einen Aktivierungsschalter handeln, der für eine übliche Feldwendeautomatik verwendet wird. Ergänzend oder alternativ hierzu ist es auch von Vorteil, eine zweite Eingabevorrichtung vorzusehen, durch welche eine Hubhöhe des Kopplungsrahmens oder des Arbeitsgerätes als Sollwert vorgebbar ist. Diese Eingabevorrichtungen befinden sich zweckmäßigerweise am Fahrerstand, insbesondere am Bedienungspult einer Fahrzeugkabine.

Die erfindungsgemäße Ventilanordnung enthält Kammeranschlüsse, die sich mit der jeweils ersten und zweiten Kammer der oberen und unteren Hydraulikzylinder verbinden lassen. Sie enthält des Weiteren Ventile, durch welche die erste Kammer des oberen rechten mit der ersten Kammer des unteren rechten Hydraulikzylinders sowie die erste Kammer des oberen linken mit der ersten Kammer des unteren linken Hydraulikzylinders sowie die zweite Kammer des oberen rechten mit der zweiten Kammer des oberen linken Hydraulikzylinders sowie die zweite Kammer des unteren rechten mit der zweiten Kammer des unteren linken Hydraulikzylinders wahlweise miteinander verbindbar sind. Die Ventile sind durch ein Schwimmstellungssignal gemeinsam zu öffnen.

Vorzugsweise enthält die Ventilanordnung einen Sumpfanschluss, der sich mit einem Flüssigkeitsvorratsbehälter verbinden lässt, sowie wenigstens ein Nachfüllventil, welches einen Flüssigkeitsfluss von dem Sumpfanschluss zu einem Kammeranschluss ermöglicht.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine perspektivische Ansicht des Hecks eines Ackerschleppers mit einer ersten erfindungsgemäßen Geräteschnittstelle,
- Fig. 2: eine perspektivische Ansicht des Hecks eines Ackerschleppers mit einer zweiten erfindungsgemäßen Geräteschnittstelle,
- Fig. 3: ein Hydraulikdiagramm einer erfindungsgemäßen Ventilanordnung,
- Fig. 4: die Längsschnittdarstellung einer erfindungsgemäßen Ventilanordnung und
- Fig. 5: die Querschnittdarstellung der Ventilanordnung aus Fig. 4 längs der Linie 5 - 5.

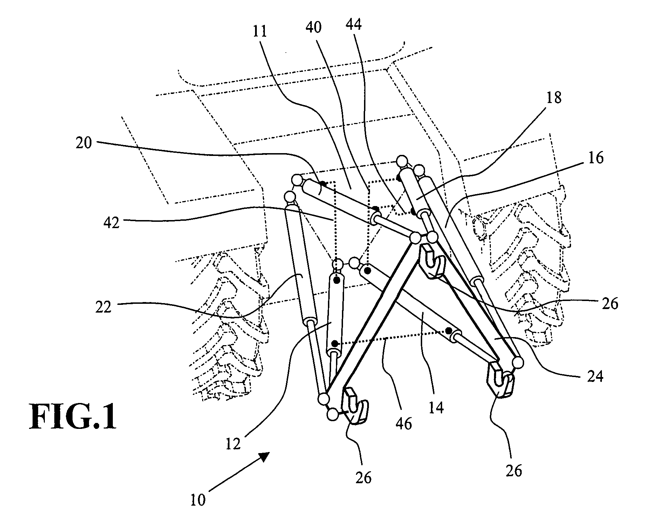

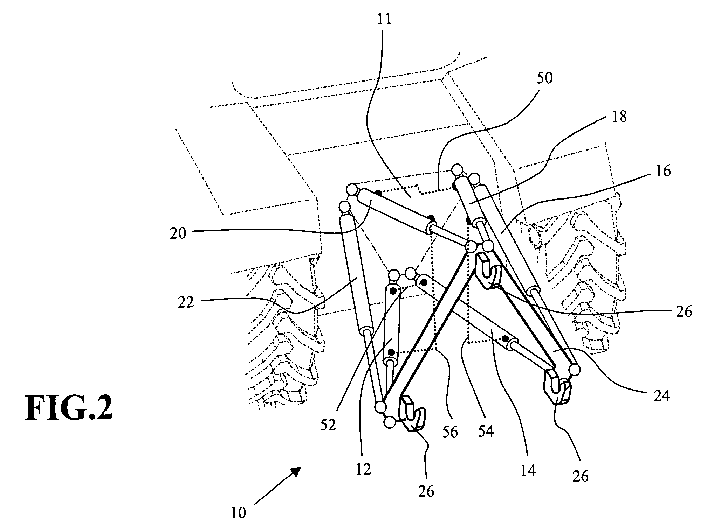

Aus den Figuren 1 und 2 geht jeweils eine Geräteschnittstelle 10 hervor, die sechs gleiche Hydraulikzylinder 12, 14, 16, 18, 20, 22 enthält, deren jeweils erstes Ende gelenkig am Fahrzeugheck 11, beispielsweise am Differentialgehäuse, befestigt ist und deren jeweils zweites Ende an einem Kopplungsrahmen 24 gelenkig befestigt ist. Die Hydraulikzylinder 12, 14, 16, 18, 20, 22 sind in geschlossenen kinematischen Ketten nach Art eines Hexapoden angeordnet, die im Wesentlichen in den Eckpunkten eines fahrzeugseitigen Dreiecks sowie in den Eckpunkten eines rahmenseitigen Dreiecks angreifen. Es sind zwei nebeneinander angeordnete, zueinander konvergent verlaufende obere Hydraulikzylinder 18, 20, zwei nebeneinander angeordnete, zueinander konvergent verlaufende untere Hydraulikzylinder 12, 14 sowie zwei seitliche Hydraulikzylinder 16, 22 vorgesehen. Die Hydraulikzylinder sind symmetrisch angeordnet, wobei die beiden oberen und die beiden unteren Hydraulikzylinder 18, 20 und 12, 14 Dreiecke bilden. Die seitlichen Hydraulikzylinder 16, 22 übernehmen im Wesentlichen die Funktion von Hubzylindern, durch die sich ein nicht gezeigtes Anbaugerät anheben und absenken lässt.

Der Kopplungsrahmen 24 besteht aus zwei V-förmig angeordneten Schenkeln, die in einem oberen Scheitelpunkt miteinander verbunden sind und keilförmig nach unten auseinanderlaufen. Der obere Scheitelpunkt und die beiden unteren freien Enden des Kopplungsrahmens 24 bilden ein Dreieck, in deren Eckpunkten einerseits die zweiten Enden der Hydraulikzylinder 12, 14, 16, 18, 20, 22 angreifen und an denen andererseits nach oben offene Kopplungshaken 26 befestigt sind, die der Befestigung von Arbeitsgeräten dienen.

Als Hydraulikzylinder 12, 14, 16, 18, 20, 22 werden doppelseitig wirkende Hydraulikzylinder verwendet, deren jeweiliger Ringraum und Kolbenraum mit einer Steuerventilanordnung verbunden ist, welche der Längeneinstellung der Hydraulikzylinder 12, 14, 16, 18, 20, 22 aufgrund von Sollwertvorgaben dient, um den Koppelrahmen 24 und mit ihm das Arbeitsgerät in eine gewünschte Lage und Ausrichtung zu bewegen, wie es in der DE-A-199 51 840 beschrieben wurde.

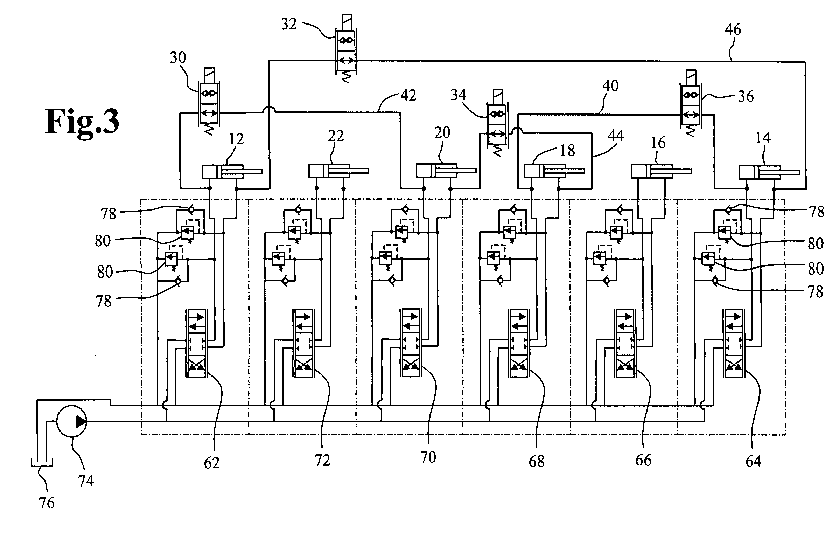

Zur Einstellung einer Schwimmstellung ist eine Ventilanordnung vorgesehen, die im Wesentlichen vier elektromagnetisch ansteuerbare 2/2-Wege-Sitzventile 30, 32, 34, 36 enthält, welche in Fig. 3 dargestellt sind. Durch elektrische Betätigung dieser Sitzventile 30, 32, 34, 36 lassen sich bestimmte Kolbenräume und Ringräume der Hydraulikzylinder 12, 14, 18, 20 miteinander verbinden bzw. trennen.

Welche der Kolbenräume und Ringräume für eine Schwimmstellung jeweils miteinander zu verbinden sind, ist in den Figuren 1 und 2, in denen zwei unterschiedliche Ausführungsbeispiele gezeigt sind, durch gestrichelte Linien dargestellt. Gemäß Fig. 1 sind die vier Sitzventile 30, 32, 34, 36 in folgenden Verbindungsleitungen 40, 42, 44, 46 angeordnet:

In der Verbindungsleitung 40 zwischen der Kolbenkammer des oberen rechten Hydraulikzylinders 18 und der Kolbenkammer des unteren rechten Hydraulikzylinders 14 befindet sich das Sitzventil 36. In der Verbindungsleitung 42 zwischen der Kolbenkammer des oberen linken Hydraulikzylinders 20 und der Kolbenkammer des unteren linken Hydraulikzylinders 12 befindet sich das Sitzventil 30. In der Verbindungsleitung 44 zwischen der Ringkammer des oberen rechten Hydraulikzylinders 18 und der Ringkammer des oberen linken Hydraulikzylinders 20 befindet sich das Sitzventil 34. In der Verbindungsleitung 46 zwischen der Ringkammer des unteren rechten Hydraulikzylinders 14 und der Ringkammer des unteren linken Hydraulikzylinders 12 befindet sich das Sitzventil 32.

Sind alle Sitzventile 30, 32, 34, 36 geöffnet und die Steuerventile 62, 70, 68, 64, die später näher erläutert werden, gesperrt, so ergibt sich beim durch äußere Seitenkräfte induzierten Seitenpendeln ein Flüssigkeitsaustausch zwischen den Hydraulikzylindern 12, 14, 18, 20. Beim Seitenpendeln nach links fahren die Hydraulikzylinder 12 und 18 synchron aus und die Hydraulikzylinder 14 und 20 synchron auf den gleichen Hub ein. Bei Seitenpendeln nach rechts ergibt sich eine umgekehrte Zylinderbewegung. Dabei ist die Hubdifferenz des oberen rechten Hydraulikzylinders 18 gleich der Hubdifferenz des unteren linken Hydraulikzylinders 12 und gleich dem negativen Wert der Hubdifferenz des oberen linken Hydraulikzylinders 20 sowie des unteren rechten Hydraulikzylinders 14.

Eine hierzu alternative Anordnung ist in Fig. 2 dargestellt. Hier sind die vier Sitzventile 30, 32, 34, 36 in folgenden Verbindungsleitungen 50, 52, 54, 56 angeordnet:

In der Verbindungsleitung 50 zwischen der Kolbenkammer des oberen rechten Hydraulikzylinders 18 und der Kolbenkammer des oberen linken Hydraulikzylinders 20 befindet sich ein Sitzventil. In der Verbindungsleitung 52 zwischen der Kolbenkammer des unteren rechten Hydraulikzylinders 14 und der Kolbenkammer des unteren linken Hydraulikzylinders 12 befindet sich ein Sitzventil. In der Verbindungsleitung 54 zwischen der Ringkammer des oberen rechten Hydraulikzylinders 18 und der Ringkammer des unteren rechten Hydraulikzylinders 14 befindet sich ein Sitzventil. In der Verbindungsleitung 56 zwischen der Ringkammer des oberen linken Hydraulikzylinders 20 und der Ringkammer des unteren linken Hydraulikzylinders 12 befindet sich ein Sitzventil.

Alle Sitzventile 30, 32, 34, 36 werden gemeinsam durch ein Steuersignal, welches durch die Bedienungsperson auslösbar ist, derart angesteuert, dass alle Verbindungsleitungen 40, 42, 44, 46 bzw. 50, 52, 54, 56 gleichzeitig offen oder geschlossen sind. Soll beispielsweise nach dem Einsetzen eines Arbeitsgerätes in den Boden das freie Seitenpendeln der Geräteschnittstelle aktiviert werden, so löst die Bedienungsperson über einen nicht näher dargestellten Schwimmstellungsschalter, der in der Fahrzeugkabine angeordnet ist, ein elektrisches Steuersignal aus, welches die Sitzventile 30, 32, 34, 36 öffnet (Schwimmstellung). Es kann nun ein Flüssigkeitsaustausch zwischen den oberen und unteren Hydraulikzylindern 12, 14, 18, 20 erfolgen und der Koppelrahmen 24 kann infolge seitlicher Kräfte des Anbaugerätes seitlich auslenken. Die beiden seitlichen Zylinder 16, 22 sind nicht in die Schwimmstellungs-Ventilanordnung eingebunden und bleiben je nach dem Einzelfall starr oder im Gleichlauf. Bevor das Arbeitsgerät wieder ausgehoben wird, wird das freie seitliche Pendeln ausgeschaltet, indem die Bedienungsperson über den Schwimmstellungsschalter ein entsprechendes Steuersignal auslöst, durch welches die Sitzventile 30, 32, 34, 36 geschlossen werden und ein Flüssigkeitsaustausch zwischen den Hydraulikzylindern 12, 14, 18, 20 nicht mehr möglich ist (Steuerstellung). Durch die Deaktivierung des Seitenpendelns wird vermieden, dass das Arbeitsgerät bei Manövern am Vorgewende oder bei Transportarbeiten hin- und herschwankt.

Aus Sicherheitsgründen und aus Gründen der Arbeitserleichterung ist es sinnvoll, die Einschaltung der Sitzventile 30, 32, 34, 36 in Abhängigkeit von der Hubhöhe vorzunehmen. So kann eine Steuerung bei einer bestimmten Hubhöhe (z.B. nach dem Eindringen des ersten Pflugkörpers in den Boden) die horizontale Schwimmstellung automatisch aktivieren und beim Ausheben des Pfluges in Abhängigkeit einer vorgegebenen Hubhöhe deaktivieren. Damit wird die Bedienungsperson wesentlich entlastet. Sie schaltet bei Beginn der Bodenbearbeitung die Schwimmstellungsautomatik ein und am Ende der Bodenbearbeitung wieder aus.

Wenn beim Seitenpendeln nach links der obere linke Hydraulikzylinder 20 und/oder der untere rechte Hydraulikzylinder vollständig eingefahren wird, kann sich das Arbeitsgerät nicht mehr seitlich weiterbewegen. Entsprechend, wenn beim Seitenpendeln nach rechts der obere rechte Hydraulikzylinder 18 und/oder der untere linke Hydraulikzylinder 12 vollständig eingefahren wird, kann sich das Arbeitsgerät nicht mehr seitlich weiterbewegen. Dies ergibt mechanische Anschläge (vollständiges Einfahren) des oberen rechten Hydraulikzylinders 18 und/oder des unteren linken Hydraulikzylinders 12 beim Pendeln nach rechts und mechanische Anschläge des oberen linken Hydraulikzylinders 20 und/oder des unteren rechten Hydraulikzylinders 14 beim pendeln nach links.

Durch diese Anschläge wird die Geräteschnittstelle seitlich stabilisiert. Somit werden für die Seitenstabilisierung keine zusätzlichen Seitenstabilisatoren (auch keine für den Transport) benötigt. Der freie Seitenweg ist von der Ausgangsposition der Hydraulikzylinder 12 und 14 bzw. 18 und 20 abhängig.

Es ist grundsätzlich möglich, das freie Seitenpendeln in bestimmten Seitenpositionen aktiv und unabhängig von der Position (d. h. unabhängig vom jeweiligen Zylinderanschlag) der Hydraulikzylinder 12, 14, 18, 20 abzuschalten. Dies ermöglicht den seitlichen Schwimmweg des Arbeitsgerätes vom Fahrersitz aus zu beschränken. Durch die Einschränkung des Schwimmweges können z. B. Probleme beim Pflügen am Hang beseitigt werden, da eine Abdrift durch die Schwerkraft des Pfluges vermieden wird, die zu einer krummen Furche und zum Eindrücken der Furchenwand führen könnte.

Der in Fig. 3 dargestellte Hydraulikkreis enthält neben den bereits beschriebenen Sitzventilen 30, 32, 34, 36, durch die sich Kolben- und Ringräume der Hydraulikzylinder 12, 14, 18, 20 verbinden oder trennen lassen sechs elektromagnetisch ansteuerbare Steuerventile 62, 64, 66, 68, 70, 72. Jedes dieser Steuerventile 62, 64, 66, 68, 70, 72 ist einem der sechs Hydraulikzylinder 12, 14, 16, 18, 20, 22 zugeordnet und verbindet die Kolbenkammer bzw. die Ringkammer des Hydraulikzylinders 12, 14, 16, 18, 20, 22 wahlweise mit dem Systemdruck einer Hydraulikpumpe 74 oder mit einem drucklosen Vorratsbehälter 76. Die Steuerventile 62, 64, 66, 68, 70, 72 werden durch eine nicht näher dargestellte Steuereinrichtung angesteuert, um den Kopplungsrahmen 24 und mit ihm ein angebautes Arbeitsgerät in eine bestimmte räumliche Lage und Ausrichtung zu bewegen, wie es in der DE-A-199 51 840 beschrieben wurde. Die Ansteuerung der oberen und unteren Hydraulikzylinder 12, 14, 18, 20 erfolgt nur dann, wenn sich das System nicht in Schwimmstellung befindet.

Der Hydraulikkreis enthält des Weiteren Nachfüllventile 78, die jeden Kolbenraum und jeden Ringraum der Hydraulikzylinder 12, 14, 16, 18, 20, 22 mit dem Vorratsbehälter 76 verbinden und einen Flüssigkeitsaustausch zulassen, sofern der Druck im Hydraulikzylinder 12, 14, 16, 18, 20, 22 unter den Druck im Vorratsbehälter 76 sinkt. Des Weiteren steht jeder Kolbenraum und jeder Ringraum über ein zugehöriges Folgeventil 80 mit dem Vorratsbehälter 76 in Verbindung, welches bei Überschreiten eines Grenzdrucks im Kolbenraum oder im Ringraum einen Flüssigkeitsabfluss zum Vorratsbehälter 76 ermöglicht.

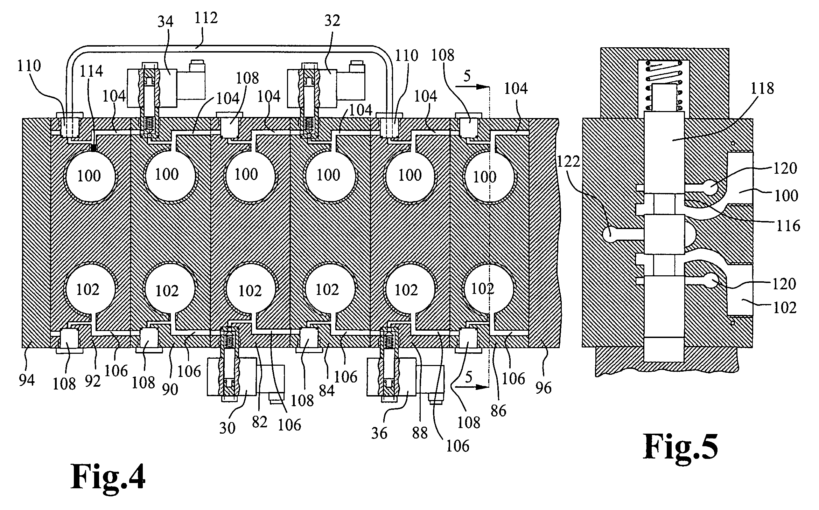

Wie es aus Fig. 4 hervorgeht, ist jedem Hydraulikzylinder 12, 14, 16, 18, 20, 22 ein eigenes Ventilmodule 82, 84, 86, 88, 90, 92 zugeordnet. Die Zuordnung entspricht der Reihenfolge der jeweiligen Bezugsziffern. Die Ventilmodule 82, 84, 86, 88, 90, 92 sind in einer Reihe dichtend nebeneinander angeordnet. Auf einer Seite befindet sich ein Enddeckel 94, auf der anderen Seite befindet sich ein lediglich angedeuteter Verteilerdeckel 96. Die Ventilmodule 82, 84, 86, 88, 90, 92 weisen identische Grundkörper auf und unterscheiden sich lediglich durch unterschiedliche Bestückung durch Stopfen und Ventile.

Jedes Ventilmodul 82, 84, 86, 88, 90, 92 enthält zwei Kammeranschlüsse 100, 102, die über nicht näher gezeigt Leitungen mit dem Kolbenraum bzw. dem Ringraum des zugehörigen Hydraulikzylinders 12, 14, 16, 18, 20, 22 in Verbindung stehen. In den Ventilmodulen 82, 84, 86, 88, 90, 92 sind Verbindungsleitungen 104, 106 vorgesehen, die einerseits der Verbindung der ringraumseitigen Anschlüsse 100 und andererseits der Verbindung der kolbenraumseitigen Anschlüsse 102 dienen. In jede dieser Verbindungsleitungen 104, 106 ist ein Bauelement eingesetzt. Es handelt sich hierbei um Stopfen 108, Verbindungseinsätze 110 oder Sitzventile 30, 32, 34, 36. Jeder Stopfen 108 verschließt die Verbindungsleitung 104, 106 zu beiden Seiten. Ein Verbindungseinsatz 110 verbindet eine Seite der Verbindungsleitung 104 mit einer Verbindungsleitung 112 und verschließt die andere Seite der Verbindungsleitung 104. Die Verbindungsleitung 112 wurde der besseren Übersichtlichkeit halber als äußere Leitung dargestellt. Sie ist jedoch vorzugsweise als innere Bohrung oder Öffnung ausgebildet. Durch die Sitzventile 30, 32, 34, 36 lässt sich die Verbindungsleitung 104, 106 öffnen oder schließen. Im Ventilmodul 92 ist der Anschluss 100 durch einen Verschluss 114 gegenüber der Verbindungsleitung 104 abgesperrt.

Neben der anhand der Fig. 4 beschriebenen Hydraulikanordnung für die Schwimmstellung enthält jedes Ventilmodul 82, 84, 86, 88, 90, 92 eine Ventilbohrung 116, in der ein Steuerkolben 118 verschiebbar angeordnet und ein Steuerventil 62, 64, 66, 68, 70, 72 bildet, dessen Funktion bereits beschrieben wurde. Durch Verschiebung des Steuerkolben 118 werden die beiden Anschlüsse 100, 102 verschlossen oder wahlweise mit einen Sumpfanschluss 120 oder einem Pumpenanschluss 122 verbunden.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Geräteschnittstelle zur Kopplung von Arbeitsgeräten an ein Arbeitsfahrzeug mit sechs längenverstellbaren doppelseitig wirkenden Hydraulikzylindern (12, 14, 16, 18, 20, 22), die nach Art eines Hexapoden zwischen dem Arbeitsfahrzeug und einem Kopplungsrahmen (24), der Kopplungsmittel (26) für die Befestigung der Arbeitsgeräte aufweist, angeordnet sind und die im Wesentlichen in den Eckpunkten eines fahrzeugseitigen Dreiecks sowie in den Eckpunkten eines rahmenseitigen Dreiecks angreifen und die zwei nebeneinander angeordnete, zueinander konvergent verlaufende obere Hydraulikzylinder (18, 20), zwei nebeneinander angeordnete, zueinander konvergent verlaufende untere Hydraulikzylinder (12, 14) sowie zwei seitliche Hydraulikzylinder (16, 22) enthalten, **gekennzeichnet durch** Mittel, die dafür Sorge tragen,
dass für eine Pendelbewegung nach rechts der untere rechte Hydraulikzylinder (14) und der obere linke Hydraulikzylinder (20) synchron ausfahren und der untere linke Hydraulikzylinder (12) und der obere rechte Hydraulikzylinder (18) synchron einfahren und
dass für eine Pendelbewegung nach links der untere rechte Hydraulikzylinder (14) und der obere linke Hydraulikzylinder (20) synchron einfahren und der untere linke Hydraulikzylinder (12) und der obere rechte Hydraulikzylinder (18) synchron ausfahren,
wobei die Einfahrhübe gleich den Ausfahrhüben sind.

2. Geräteschnittstelle nach Anspruch 1, **dadurch gekennzeichnet, dass** die Mittel eine Ventilanordnung enthalten, durch welche sich Kammern der Hydraulikzylinder (12, 14, 18, 20) in geeigneter Weise verbinden lassen.

3. Geräteschnittstelle nach Anspruch 2, **dadurch gekennzeichnet, dass** die Ventilanordnung in eine Steuerventilanordnung integriert ist.

4. Geräteschnittstelle nach einem der vorhergehenden Ansprüche, **dadurch gekennzeichnet, dass** jedem Hydraulikzylinder (12, 14, 16, 18, 20, 22) ein Ventilmodul (82, 84, 86, 88, 90, 92) zugeordnet ist, der wenigstens ein Element (30, 32, 34, 36, 108, 110, 114) der Ventilanordnung sowie wenigstens ein dem Hydraulikzylinder (12, 14, 16, 18, 20, 22) zugeordnetes Steuerventil (62, 64, 66, 68, 70, 72) enthält.

5. Geräteschnittstelle nach einem der vorhergehenden Ansprüche, **dadurch gekennzeichnet, dass** die Mittel eine Ventilanordnung enthalten, durch welche
die erste Kammer des oberen rechten Hydraulikzylinders (18) mit der ersten Kammer des unteren rechten Hydraulikzylinders (14) sowie
die erste Kammer des oberen linken Hydraulikzylinders (20) mit der ersten Kammer des unteren linken Hydraulikzylinders (12) sowie
die zweite Kammer des oberen rechten Hydraulikzylinders (18) mit der zweiten Kammer des oberen linken Hydraulikzylinders (20) sowie
die zweite Kammer des unteren rechten Hydraulikzylinders (14) mit der zweiten Kammer des unteren linken Hydraulikzylinders (12)
miteinander verbindbar sind.

6. Geräteschnittstelle nach Anspruch 5, **dadurch gekennzeichnet, dass** die jeweils erste Kammer der Kolbenraum und die jeweils zweite Kammer der Ringraum des zugehörigen Hydraulikzylinders (12, 14, 18, 20) ist.

7. Geräteschnittstelle nach einem der vorhergehenden Ansprüche, **dadurch gekennzeichnet, dass** zwischen wenigstens einer Kammer eines der Hydraulikzylinder (12, 14, 16, 18, 20, 22) und einem Flüssigkeitsvorratsbehälter (76) ein Nachfüllventil (78) vorgesehen ist, welches einen Flüssigkeitsfluss vom Flüssigkeitsvorratsbehälter (76) zu dem Hydraulikzylinder (12, 14, 16, 18, 20, 22) ermöglicht.

8. Geräteschnittstelle nach einem der vorhergehenden Ansprüche, **dadurch gekennzeichnet, dass** die Ausfahrhübe und/oder die Einfahrhübe der oberen und der unteren Hydraulikzylinder (12, 14, 18, 20) derart begrenzt sind, dass sie die seitliche Pendelauslenkung und/oder den Pendelwinkel auf vorgebbare Werte begrenzen.

9. Geräteschnittstelle nach einem der vorhergehenden Ansprüche, **gekennzeichnet durch** Steuerungsmittel, die in Abhängigkeit eines Hubhöhensignals, welches die aktuelle Hubhöhe des Kopplungsrahmens (26) oder des Arbeitsgerätes repräsentiert, die horizontale Schwimmstellung automatisch aktiviert und/oder deaktiviert wird.

10. Geräteschnittstelle nach einem der vorhergehenden Ansprüche, **gekennzeichnet durch** eine erste Eingabevorrichtung, **durch** welche die horizontale Schwimmstellung aktivierbar und deaktivierbar ist und/oder **durch** eine zweite Eingabevorrichtung, **durch** welche eine Hubhöhe des Kopplungsrahmens (26) oder des Arbeitsgerätes als Sollwert vorgebbar ist.

11. Ventilanordnung für eine Geräteschnittstelle nach einem der vorhergehenden Ansprüche, **gekennzeichnet durch** Kammeranschlüsse (100, 102), die sich mit der jeweils ersten und zweiten Kammer der oberen und unteren Hydraulikzylinder (12, 14, 18, 20) verbinden lassen, und **durch** Ventile (30, 32, 34, 36), **durch** die
die erste Kammer des oberen rechten Hydraulikzylinders (18) mit der ersten Kammer des unteren rechten Hydraulikzylinders (14) sowie
die erste Kammer des oberen linken Hydraulikzylinders (20) mit der ersten Kammer des unteren linken Hydraulikzylinders (12) sowie
die zweite Kammer des oberen rechten Hydraulikzylinders (18) mit der zweiten Kammer des oberen linken Hydraulikzylinders (20) sowie
die zweite Kammer des unteren rechten Hydraulikzylinders (14) mit der zweiten Kammer des unteren linken Hydraulikzylinders (12)
wahlweise miteinander verbindbar sind,
wobei die Ventile (30, 32, 34, 36) **durch** ein Schwimmstellungssignal gemeinsam ansteuerbar sind.

12. Ventilanordnung nach Anspruch 11, **gekennzeichnet durch** einen Sumpfanschluss (120), der sich mit einem Flüssigkeitsvorratsbehälter (76) verbinden lässt, und **durch** wenigstens ein Nachfüllventil (80), welches einen Flüssigkeitsfluss von dem Sumpfanschluss (120) zu einem Kammeranschluss (100, 102) ermöglicht.
